# EUROPEAN PATENT SPECIFICATION

(11) **EP 2 527 652 B1**
(45) Date of publication and mention of the grant of the patent: **14.06.2017**
(21) Application number: 12168806.3
(22) Date of filing: 22.05.2012
(51) Int. Cl.: F03G 7/08

(54) **DEVICE FOR RECOVERING PART OF THE KINETIC ENERGY OF MOVING MOTOR VEHICLES**
VORRICHTUNG ZUR RÜCKGEWINNUNG VON TEIL DER KINETISCHEN ENERGIE VON KRAFTFAHRZEUGEN
DISPOSITIF DE RECUPERATION DE PARTIE DE L'ENERGIE CINETIQUE DE VEHICULES AUTOMOBILES EN MOUVEMENT

(30) Priority: 26.05.2011 IT MI20110949
(43) Date of publication of application: 28.11.2012
(73) Proprietor: GM Oil & Gas Machinery S.r.l., 20033 Desio, MB (IT)
(72) Inventor: Mazzotta, Giovanni, 20832 Desio MB (IT)
(74) Representative: Premru, Rok

(56) References cited:
- EP-A1- 2 316 759
- WO-A1-95/16133
- DE-U1-202006 002 536
- US-A1- 2004 042 852

## Description

There is disclosed herein a device for recovering part of the kinetic energy of moving motor vehicles

Such device is used, for instance, in high-traffic areas with a substantially constant flow of motor vehicles for several hours a day.

The kinetic energy so recovered may be converted, for instance, into electric energy.

DE 20 2006 002 536 U1 discloses a device for recovering part of the kinetic energy of braking motor vehicles

The present inventor provides a device that can be used on any road, and particularly in road sections in which the motor vehicles usually accelerate (e.g. at the exit of highway toll gates, at the exit of gas stations, on entrance or acceleration ramps of any road or highway, on entrance of crossroads, when leaving traffic lights, at the exit of roundabouts, etc.).

When a motor vehicle accelerates its speed (e.g. when it exits a highway toll gate or a highway gas station, a roundabout, a traffic light or a crossroad), a considerable amount of kinetic energy is dissipated and discharged to the ground through the driving wheels.

On certain high-traffic road sections (e.g. at highway toll gates), there is a substantially continuous flow of vehicles which must first slow down or even stop (e.g. to pay the highway toll) and then restart by accelerating.

Therefore, large amounts of kinetic energy are dissipated.

The purpose of the present inventor is to provide a solution for recovering at least part of the kinetic energy of moving motor vehicles, particularly accelerating motor vehicles.

Particularly, an object of the invention is to provide a solution for recovering at least part of the kinetic energy that motor vehicles dissipate in the ground when they accelerate (e.g. at the exit of highway toll gates, crossroads, roundabouts, etc.).

This object is achieved by a device as defined in claim 1.

Further advantages are achieved by the additional features of the dependent claims.

A possible embodiment of a device for recovering kinetic energy from moving motor vehicles will be now described with reference to the accompanying drawings in which:

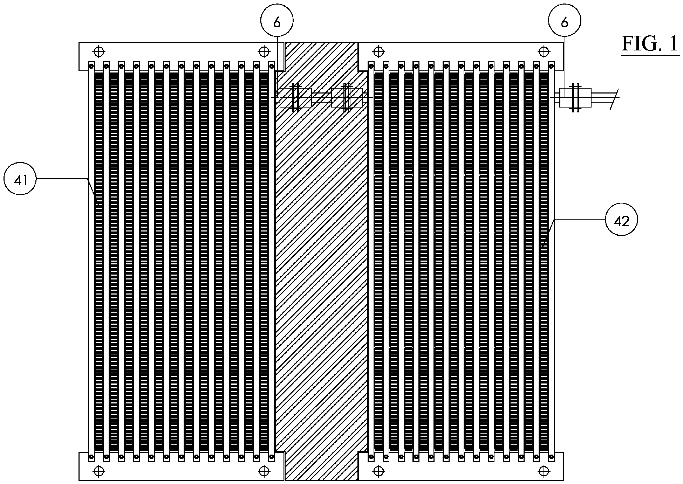

- FIG. 1 is a schematic top view of a device for converting the kinetic energy of a vehicle into electric energy;
- Figure 2 is a schematic longitudinal section view of the device of Figure 1;

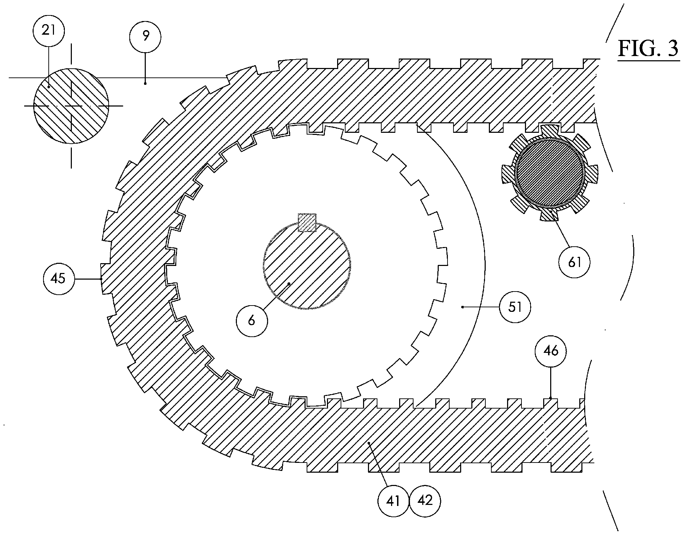

- Figure 3 is a detail of the view of Figure 2;

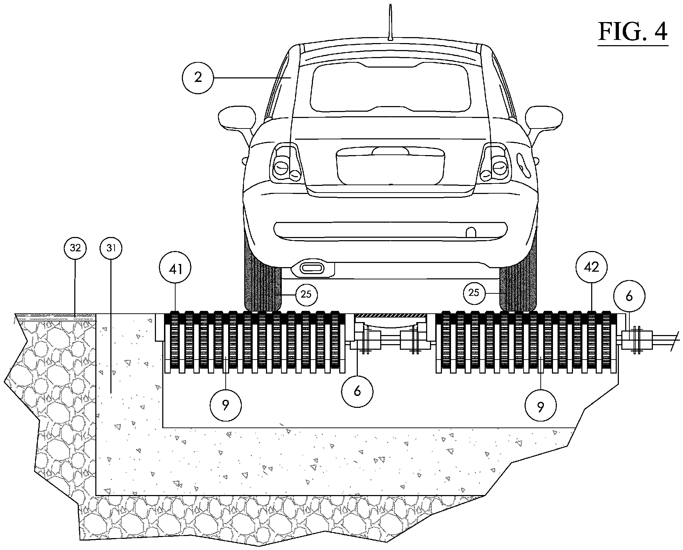

- Figure 4 is a schematic cross sectional view of the device of Figure 1;

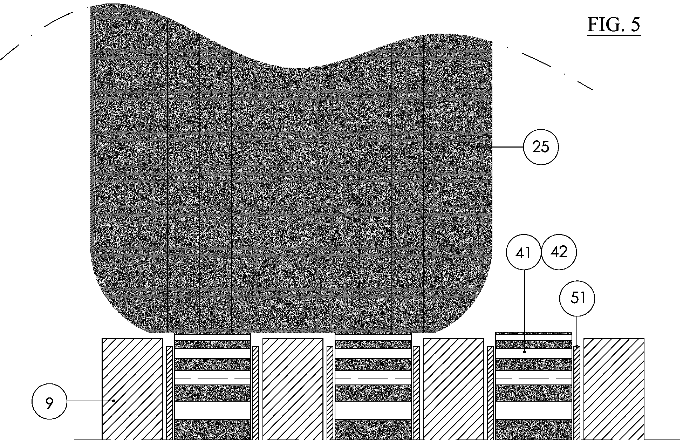

- Figure 5 is a detail of the view of Figure 4;

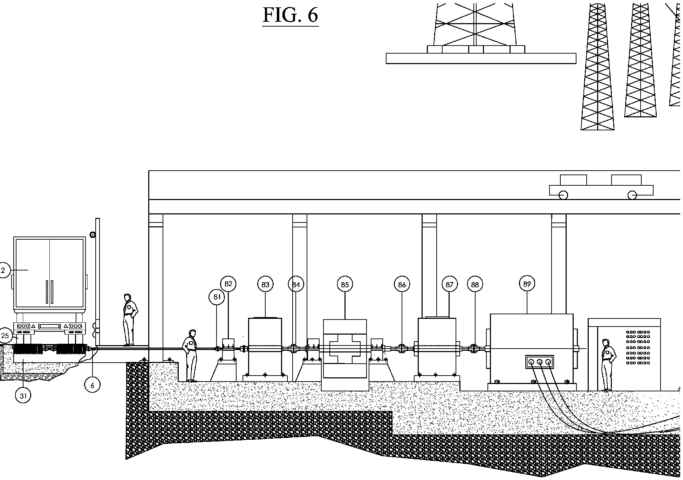

- Figure 6 is a schematic view that generally shows a device for recovering the kinetic energy of moving motor vehicles and converting it into electric energy, combined with an electric energy generator.

Referring to the accompanying drawings, a device 1 is disclosed, for recovering part of the kinetic energy of motor vehicles 2 driving on a road section 3.

The device 1 is inserted in a cavity formed in a road surface 32 and comprises a plurality of belts 41, 42, arranged parallel to each other and to the direction of extension of the road.

The belts 41, 42 are adapted to rotate around a plurality of driven pulleys 51-57 and have an upper portion that projects out of the road surface.

At least one of the driven pulleys 51 is adapted to drive a shaft 6.

The driving wheels 25 of the motor vehicles that run on the belts 41, 42 cause rotation of the belts 41, 42, the pulleys 51-57 that support the belts 41, 42, the idle support wheels 61-66 and the shaft 6 keyed on one of the pulleys.

In the illustrated embodiment, each belt 41, 42 also runs around a plurality of idle support wheels 61-66 that support the upper portion of the belts and are designed to prevent any bending of the belts 41, 42 when the motor vehicles drive thereon.

The plurality of rotatable belts 41, 42 has an upper portion that projects out of the road surface 3, e.g. by about 8-12 mm.

The edges of the belts accommodate at their ends the height difference in a curvilinear fashion, thereby allowing gradual contact with the motor vehicle wheels.

The plurality of belts 41, 42 has elongate metal elements 9 intervening therebetween, which are located at a lower level than the belts 41, 42, and coinciding with the level of the road surface.

Inserts 20, 21 may be provided at the opposite longitudinal ends of the device, which have an upper portion projecting out of the road surface by about 5 mm, thereby helping to smoothen wheel impact and allow softer entry and exit of such motor vehicle wheels on the device.

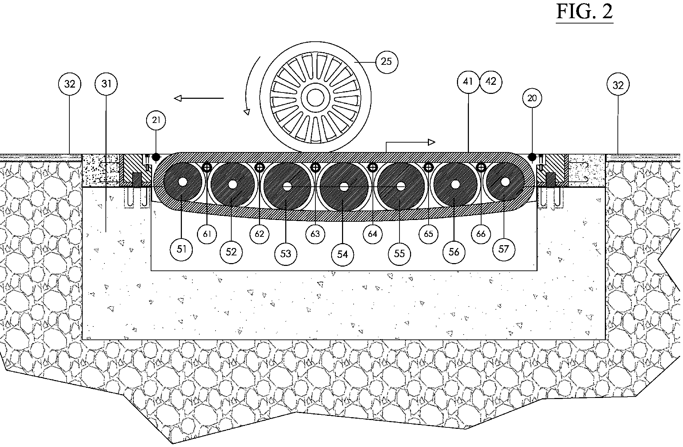

In its embodiment the device 1 has a unidirectional motion (as shown in Fig. 2), and hence neutralizes any oppositely directed motion caused by the thrust moment upon first impact of the motor vehicle wheels.

In the illustrated embodiment, each rotatable belt 41, 42 is a belt with a toothed outer profile 45.

This solution affords adequate contact, and improves recovery of the energy discharged by the driving wheels 25, 25 of the motor vehicles 2 on the device 1.

In the illustrated embodiment, each rotatable belt 41, 42 is a belt with an inner toothed profile 46 and the driven pulleys 51-57 are toothed pulleys.

This solution maximizes the power transmitted to the shaft 6.

The belts 41, 42 may be made of rubber with a steel core.

Belts having inner and outer teeth, as shown in the drawings, are commercially known as "tracks".

In a possible embodiment, the plurality of belts 41, 42 is divided into a first set 41 and a second set 42; the first and second sets of belts are connected together by two shafts and a mechanical coupling joint.

In a technically equivalent embodiment (not shown), the first set of belts, or tracks 41 is replaced by a first individual track and the second set of belts or tracks 42 is replaced by a second individual track.

The contact surface of the individual tracks will extend to substantially the same extent as that of the sets of belts.

The energy recovered with the above described device may be used, for instance, to generate electric energy.

For this purpose, the shaft 6 may be connected to electric energy generator means 89.

The device 1 recovers part of the power of the driving wheels of the motor wheels that run on the rotating belts and causes the shaft 6 to rotate.

The above described device 1 may be used in combination with an electric energy generator.

In the illustrated embodiment, the shaft 6 of the device 1 is coupled, via a first joint 81, to a one-way free wheeling clutch 82, which is in turn connected to a speed reducing unit 83.

The unidirectional free wheeling clutch 82 transmits rotation in one direction.

The speed reduction unit 83 is in turn connected, via second joint 84, to an inertial flywheel 85 which is in turn connected, via a third joint 86, to a speed increaser 87.

The inertial flywheel 85 is provided because the rotation speed of the shaft 6 changes with time.

Finally, the speed increaser 87 is connected via a fourth joint 88 to an alternator 89 for generating alternating current.

It shall be noted that this solution has no environmental impact.

## Claims

1. A device (1) for recovering part of the kinetic energy of motor vehicles (2) driving on a road section (3), said device (1) being inserted in a cavity (31) formed in a road surface (32), said device (1) comprising
a plurality of parallel belts (41, 42), which are adapted to rotate when subjected to stress, each belt being adapted to rotate about a plurality of driven pulleys (51-57), at least one of said driven pulleys (51) being adapted to drive a shaft (6);
said plurality of rotatable belts (41, 42) having an upper portion that projects out of said road surface (3); **characterized in that** each rotatable belt runs about a plurality of free support wheels (61-66), which support said upper portion of said plurality of belts (41, 42); said plurality of belts (41, 42) has elongate metal elements (9) intervening therebetween, which are located substantially level with the road surface; and said plurality of belts (41, 42) is adapted to rotate in one direction opposite to the direction of rotation of motor vehicle wheels.

2. A device as claimed in claim 1, wherein each rotatable belt (41, 42) is a belt with an outer toothed profile (45).

3. A device as claimed in claim 1 or 2, wherein each rotatable belt (41, 42) is a belt with an inner toothed profile (46) and wherein said driven pulleys (51-57) are toothed pulleys.

4. A device as claimed in any preceding claims, wherein said plurality of belts (41, 42) is divided into a first set (41) and a second set (42), said first set and said second set being connected together by two shafts and a mechanical coupling joint.

5. A device as claimed in any preceding claim, wherein said shaft (6) is connected to electric energy generators (89).

## Patentansprüche

1. Vorrichtung (1) zur Rückgewinnung von Teil der kinetischen Energie von auf einem Straßenabschnitt (3) fahrenden Kraftfahrzeugen (2), wobei die Vorrichtung (1) in einer in der Straßendecke (32) geformten Ausnehmung (31) eingesetzt ist, und die Vorrichtung (1) umfasst:
eine Vielzahl von parallelen Riemen (41, 42), die bei Einwirkung einer Belastung zum Umlaufen geeignet sind, wobei jeder Riemen zu Umlaufen über einer Vielzahl von angetriebenen Riemenscheiben (51-57) geeignet ist,
mindestens eine der Riemenscheiben (51) zum Antrieb einer Welle (6) geeignet ist;
die Vielzahl von umlaufbaren Riemen (41, 42) einen oberen Abschnitt aufweist, der aus der Straßendecke (3) hinausragt;
**dadurch gekennzeichnet, dass**
jeder umlaufbare Riemen über einer Vielzahl von Freilauf-Stützräder (61-66) umläuft, welche der obere Abschnitt der Vielzahl von Riemen (41,42) tragen,
wobei die Vielzahl von Riemen (41,42) mit zwischen diesen angeordneten länglichen Metallelementen (9) versehen sind, die im Wesentlichen im Niveau der Straßendecke angeordnet sind;
und
die Vielzahl von Riemen (41,42) zum Umlaufen in einer zur Drehrichtung der Kraftfahrzeugräder entgegengesetzten Richtung geeignet ist.

2. Vorrichtung nach Anspruch 1,
wobei jeder umlaufbare Riemen (41,42) ein Riemen mit einem außenverzahnten Profil (45) ist.

3. Vorrichtung nach Anspruch 1 oder 2,
wobei jeder umlaufbare Riemen (41,42) ein Riemen mit einem innenverzahnten Profil (46) und wobei die angetriebenen Riemenscheiben (51-57) verzahnte Riemenscheiben sind.

4. Vorrichtung nach einem der vorstehenden Ansprüche,
wobei die Vielzahl von Riemen (41,42) in eine erste Gruppe (41) und eine zweite Gruppe (42) unterteilt ist und die erste Gruppe und die zweite Gruppe über zwei Wellen und eine mechanische Kupplungsverbindung miteinander verbunden sind.

5. Vorrichtung nach einem der vorstehenden Ansprüche,
wobei die Welle (6) mit Generatoren (89) für elektrische Energie verbunden sind.

## Revendications

1. Dispositif (1) de récupération de partie de l'énergie cinétique de véhicules automobiles (2) roulant sur une section de route (3), ledit dispositif (1) étant inséré dans une cavité (31) formée dans une couche de roulement (32), ledit dispositif (1) comprenant
une pluralité de courroies parallèles (41, 42), aptes à tourner sous contrainte, chaque courroie étant apte à tourner autour d'une pluralité de poulies entraînées (51 - 57) ;
au moins une desdites poulies entraînées (51) étant apte à entraîner un arbre (6) ;
ladite pluralité de courroies rotatives (41, 42) comportant une partie supérieure faisant saillie de ladite couche de roulement (3) ;
**caractérisé en ce que** chaque courroie rotative tourne autour d'une pluralité de galets libres de support (61 - 66), qui supportent ladite partie supérieure de ladite pluralité de courroies (41, 42) ;
ladite pluralité de courroies (41, 42) comporte des éléments métalliques allongés (9) interposés entre elles, situés sensiblement au niveau de la couche de roulement ; et
ladite pluralité de courroies (41, 42) est apte à tourner dans une direction opposée à la direction de rotation des roues du véhicule automobile.

2. Dispositif selon la revendication 1, dans lequel chaque courroie rotative (41, 42) est une courroie avec un profil extérieur denté (45).

3. Dispositif selon la revendication 1 ou 2, dans lequel chaque courroie rotative (41, 42) est une courroie avec un profil intérieur denté (46) et dans lequel lesdites poulies entraînées (51 - 57) sont des poulies dentées.

4. Dispositif selon n'importe laquelle des revendications précédentes, dans lequel ladite pluralité de courroies (41, 42) est subdivisée en un premier ensemble (41) et un second ensemble (42), ledit premier ensemble e ledit second ensemble étant reliés l'un à l'autre par deux arbres et un joint d'accouplement mécanique.

5. Dispositif selon n'importe laquelle des revendications précédentes, dans lequel ledit arbre (6) est relié à des générateurs d'énergie électrique (89).
